# EUROPEAN PATENT APPLICATION

(11) **EP 1 544 135 A1**
(43) Date of publication of application: **22.06.2005**
(21) Application number: 04106565.7
(22) Date of filing: 14.12.2004
(51) Int. Cl.: B65G 23/00

(54) **Conveying belts driving device with two overlapped belt driving units**

(30) Priority: 17.12.2003 IT MI20032491
(71) Applicant: MARCHETTI, Antonio, 20142 MILANO (IT)
(72) Inventor: MARCHETTI, Antonio, 20142 MILANO (IT)
(74) Representative: Mittler, Enrico

(57) **Abstract**

There is described a device for the motorization of driving belts (22-23) to move substantially parallelepiped cases (31) on machines, comprising a lower belt driving group (3) and a higher driving group (4). Said driving groups (3,4) are driven by a unique internal motor (2) supported by a base frame (1) and connected by a first transmission (10) to a lower driving group (13) that supports and moves the lower driving group and, by a second transmission (32) and a lower transmission group to a vertical spline shaft (36). Said vertical spline shaft (36), by means of a higher transmission group (38), transmits the motion to a higher transversal shaft (30) that supports and moves the higher driving group (4).

## Description

The present invention relates to a device for the motorization of driving belts to move substantially parallelepiped cases on machines with two overlapped belts groups.

This type of machine, called "plane belt machine", usually comprises a higher driving group with two belts and a lower driving group with two driving belts too, which move substantially parallelepiped cases.

There are known command systems composed by two motor groups outside the machine, that are applied, the first one, to the higher driving group and, the second one to the lower driving group.

This system, being driven by two independent motors, doesn't ensure the perfect synchrony of the movement of the four belts, causing possible faults in the closure procedure of the parallelepiped cases. Being possible a different translation speed of the two higher belts with respect to the two lower belts, and being the cases moved by said belts, it is possible that the same cases assume an inclination, forward or rearward, owing to the different speed.

In view of the state of the art herein described, object of the present invention is to provide a command device that allows to move all four belts by a unique motor inside the machine and with a perfect synchrony of the speeds.

According to the present invention, said object is attained by means of a device for the motorization of driving belts to move substantially parallelepiped cases on machines comprising a lower belt driving group and a higher driving group, characterized in that said driving groups are driven by a unique internal motor supported by a base frame and connected by a first transmission to a lower transversal shaft that supports and moves the lower driving group, and by a second transmission and a lower transmission group to a vertical spline shaft which, by means of a higher transmission group, transmits the motion to a higher transversal shaft that supports and moves the higher driving group.

The characteristics and the advantages of the present invention will be made evident by the following detailed description of an embodiment thereof, which is illustrated as non-limiting example in the enclosed drawings, in which:

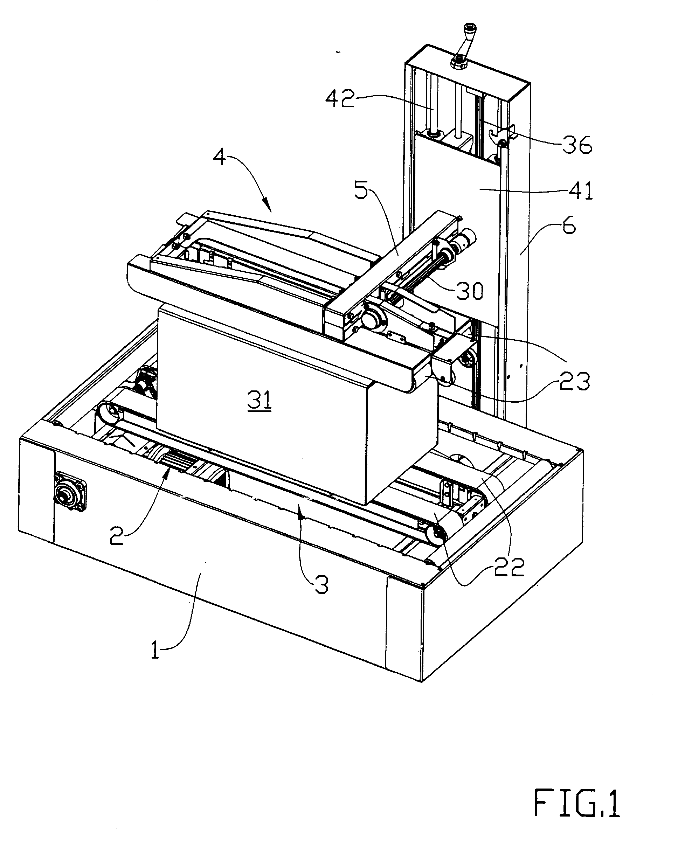

Fig. 1 shows a perspective view of a machine with two belt driving groups comprising a motorization device according to the present invention;

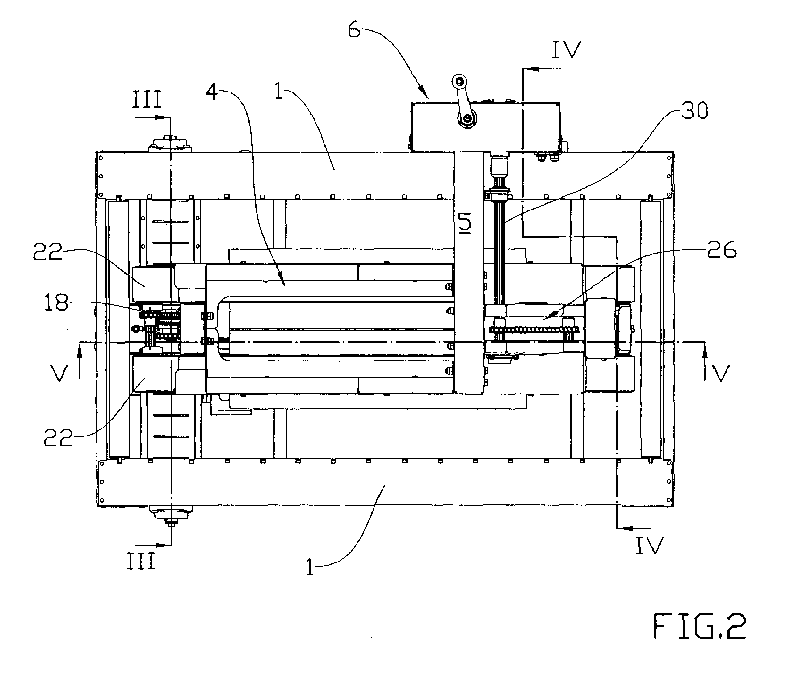

Fig. 2 shows a top plant view of the machine of Fig.1;
Fig.3 shows a sectional view according to the line III-III of Fig.2;
Fig. 4 shows a sectional view according to the line IV-IV of Fig.2;
Fig. 5 shows a sectional view according to the line V-V of Fig.2;
Fig.6 shows an enlarged sectional view of the higher driving group of the motorization device according to the present invention;
Fig.7 shows an enlarged sectional view of the lower driving group of the device according to the present invention;
A "plane belt" machine for the motion of parallelepiped cases comprises a base frame 1 that supports an internal motor 2 which commands a lower driving group 3 and a higher driving group 4 helds up by a hollow beam 5 bound in a vertically sliding adjustable way to a vertical hollow column 6.

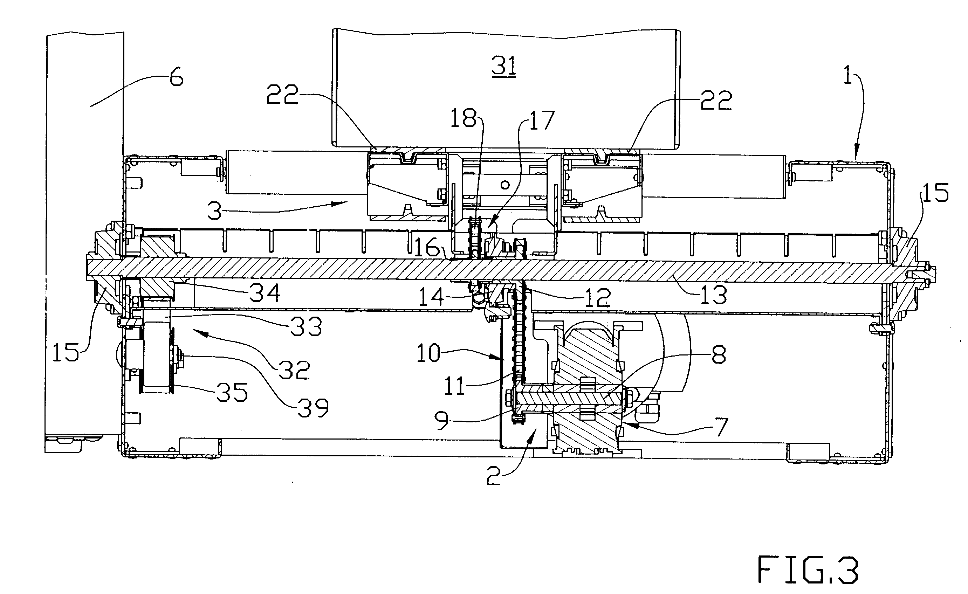

The motor 2 comprises (Fig. 3) a gearmotor 7 and a reducer shaft 8 at the end of which a pinion 9 is splined that is part of a transmission 10 also provided with a chain 11 and a second pinion 12 splined on a transversal spline shaft 13 and supported by a bearing 14.

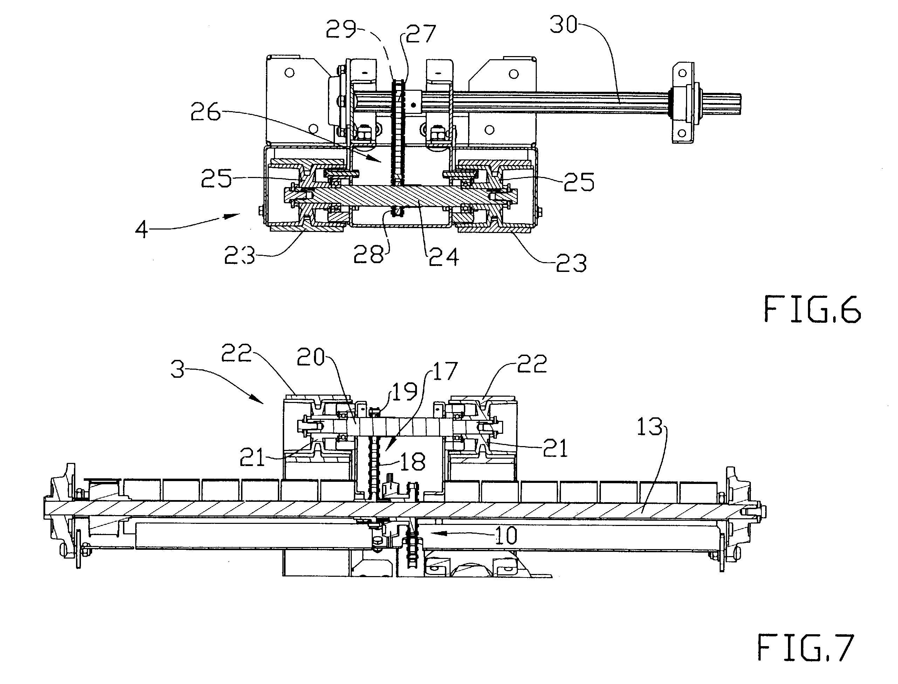

On said transversal spline shaft 13, supported by the frame 1 by means of lateral sphere supports 15, a pinion 16 is centrally splined which is part of a transmission 17 comprising also a chain 18 and a pinion 19 splined (Fig.7) on a small spline shaft 20 that is part of the lower driving group 3.

The lower driving group 3 comprises also a couple of pulleys 21 splined on the small spline shaft 20 that move lower driving belts 22 on which a parallelepiped case 31 is posed.

The higher driving group 4 (Fig. 6) comprises instead a couple of higher driving belts 23 moved by a small spline shaft 24 through pulleys 25.

A transmission 26, formed by a chain 27 stretched between a pinion 28 and a pinion 29, allows to receive the motion from a transversal spline shaft 30.

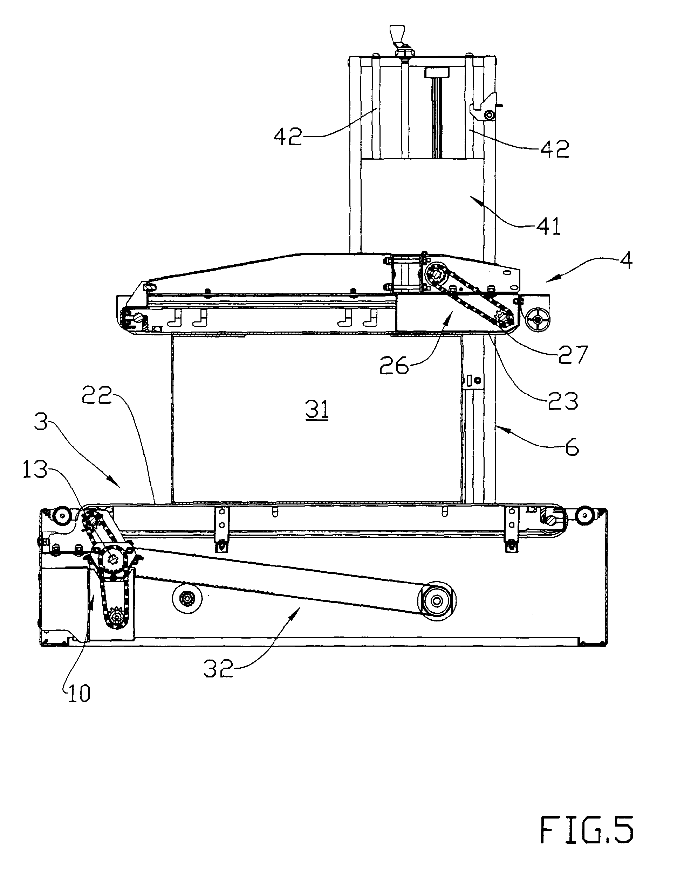

In the figures 3-5 is may be seen a transmission 32 provided with a toothed belts 33 stretched between two pinions 34-35, that is connected to a vertical spline shaft 36 by a pivot 39 and a lower fixed transmission group 37.

Said transmission 32 can alternatively be formed by a shaft and a couple of angle transmissions for the connection with the transversal spline shaft 13 and the lower transmission group 37.

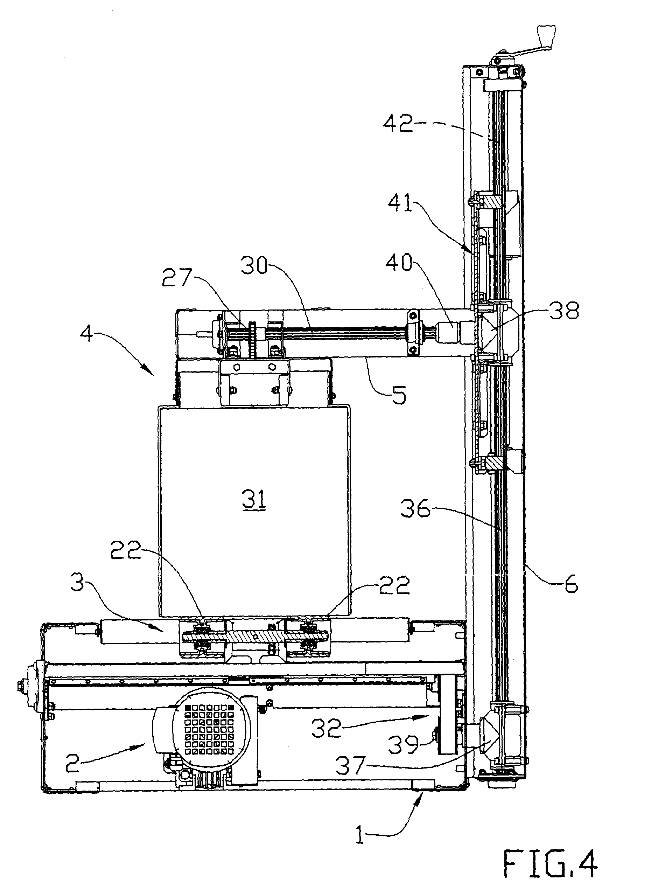

A higher movable transmission group 38 (Fig.4), by means of a coupling 40, transmits the motion from the vertical shaft 36 to the transversal spline shaft 30.

A support 41 connects said higher transmission group 38 to vertical sliding bars 42, also holding up the hollow beam 5 and all that is bound to it.

In the operation the internal motor commands the transmission 10 that rotates the transversal spline shaft 13 which, by means of the transmission 17, allows the rotation of the small spline shaft 20 and so the driving motion of the lower belts 22.

The same transversal shaft 13, by means of the transmission 32 and the lower transmission group 37, allows the rotation of the vertical shaft 36 that, by means of the higher transmission group 38 and the coupling 40, rotatably moves the spline shaft 30.

Finally, the transmission 26 transmits the motion to the spline shaft 24 that is moved by pulleys 25.

The higher transmission group 38, and herewith the higher driving group 4 by means of the beam 5, is movable in vertical direction by means of the sliding bars 42 and the splines of the vertical shaft 36. In this way the distance between the driving groups 3-4 can be defined in function of the height of the case 31.

It is evident that, by means of the motion transmission realized by the spline shafts 13, 36, 30, 24 and 20, and by the transmission groups 37-38, it is possible to obtain the same motion speeds for the lower belts 22 and the higher belts 23.

## Claims

1. Device for the motorization of driving belts (22-23) to move substantially parallelepiped cases (31) on machines comprising a lower belt driving group (3) and a higher belt driving group (4), **characterized in that** said driving groups (3, 4) are driven by a unique internal motor (2) supported by a base frame (1) and connected by a first transmission (10) to a lower driving group (13) that supports and moves the lower driving group and by a second transmission (32) and a lower transmission group to a vertical spline shaft (36) which, by means of a higher angle transmission group (38), transmits the motion to a higher transversal shaft (309 that supports and moves the higher driving group (4).

2. Device according to claim 1, **characterized in that** it is provided in machines with four belts called "plane belt machines".

3. Device according to claim 1, **characterized in that** said internal motor (2) comprises a gearmotor (7) and a reducer shaft (8).

4. Device according to claim 1, **characterized in that** said first transmission (10) is formed by a chain (11) stretched between a first pinion (9) splined on the reducer shaft, and a second pinion (12) splined on said lower transversal shaft (13) and supported by a bearing (14).

5. Device according to claim 1, **characterized in that** said lower angle transmission group (37) is fixed.

6. Device according to claim 1, **characterized in that** said higher angle transmission group (38) is movable along said vertical spline shaft (36).

7. Device according to claim 1, **characterized in that** said second transmission (32) is formed by a belt (33) stretched between a first pulley (34) splined on said higher transversal shaft (13) and a second pulley (35) that embraces a pin (39) directly connected to the lower angle transmission group (37).

8. Device according to claim 7, **characterized in that** said belt (33) is toothed.

9. Device according to claim 7, **characterized in that** said pulleys (34, 35) are toothed.

10. Device according to claim 1, **characterized in that** said second transmission (32) is formed by a shaft connected by angle transmissions both to said lower transversal shaft and to the lower transmission group.

11. Device according to claim 1, **characterized in that** said lower transversal shaft (13) is connected to the lower driving group (3) by a chain transmission (17).

12. Device according to claim 11, **characterized in that** said chain transmission (17) is formed by a chain (18) stretched between a pinion splined on said lower transversal shaft (13) and a pinion (19) splined on a small shaft (20) belonging to a lower motion group (3).

13. Device according to claim 1, **characterized in that** said higher transversal shaft (30) is supported by a hollow beam (5) bound in a vertical sliding way to a hollow column (6) supported by the base frame (1).

14. Device according to claim 13, **characterized in that** said higher transversal shaft (30) is connected to a higher transmission group (38) by a coupling (40) and to the higher driving group (4) by a chain (27) stretched between two pinions (29 and 28) splined on said higher transversal shaft (30) and on a further small shaft (24) belonging to said higher driving group (4).
